(19) Europäisches Patentamt
European Patent Office
Office européen des brevets

(11) Veröffentlichungsnummer: **0 052 716**
**A1**

(12) # EUROPÄISCHE PATENTANMELDUNG

(21) Anmeldenummer: 81107663.7

(22) Anmeldetag: 26.09.81

(51) Int. Cl.³: C 09 B 33/00
C 09 B 35/00, D 06 P 1/06
//D21H1/46

(30) Priorität: 01.10.80 DE 3037157

(43) Veröffentlichungstag der Anmeldung: 02.06.82 Patentblatt 82/22

(84) Benannte Vertragsstaaten: CH DE FR GB IT LI

(71) Anmelder: HOECHST AKTIENGESELLSCHAFT
Postfach 80 03 20
D-6230 Frankfurt/Main 80(DE)

(72) Erfinder: Rosenbusch, Kurt, Dr.
Loreleistrasse 16
D-6230 Frankfurt am Main 80(DE)

(54) **Wasserlösliche Azoverbindungen, Verfahren zu ihrer Herstellung und ihre Verwendung als Farbstoffe.**

(57) Wasserlösliche Mono- oder Polyazoverbindungen, die unter Verwendung von Kupplungskomponenten auf Basis von Resorcinharz aufgebaut sind, besitzen praktisch gleich gutes Aufziehvermögen auf allen Lederarten sowie schön deckende Eigenschaften; deswegen eignen sie sich als Farbstoffe von vorwiegend anionischer Natur sowie aufgrund der damit erzielbaren wertvollen Brauntöne zum Färben insbesondere von kationisch oder anionisch gegerbten bzw. nachgegerbten Lederartikeln, aber auch von Pelzfelllen, entsprechend den üblichen Methoden. Ebenso lassen sich Textilmaterialien aus Cellulose, Seide, Wolle oder synthetischen Polyamidfasern damit färben oder bedrucken.

Die Synthese dieser neuen Produkte erfolgt nach herkömmlicher Art durch Diazotieren und Kuppeln.

Die Verwendung von Resorcinharz in den erfindungsgemäßen Farbstoffen liefert preisgünstige Ausgangsstoffe und bedeutet einen Beitrag zum Umweltschutz.

EP 0 052 716 A1

Croydon Printing Company Ltd.

# Wasserlösliche Azoverbindungen, Verfahren zu ihrer Herstellung und ihre Verwendung als Farbstoffe

Der Gegenstand der Erfindung liegt auf dem technischen Gebiet der wasserlöslichen Azofarbstoffe, welche sich besonders gut zur Lederfärbung, aber auch zur Färbung von Pelzfellen und Textilfasern eignen.

Die Aufgabe der vorliegenden Erfindung besteht in der Weiterentwicklung preisgünstiger Lederfarbstoffe mit gleichgutem Aufziehvermögen auf allen Lederarten. Das durch ein solches Vorhaben sich ergebende Problem wird im einzelnen durch die Bedingung umrissen, daß die entsprechenden, aus den eingekuppelten Komponenten zusammengesetzten Azofarbstoffe möglichst gleichstark auf verschiedenartig gegerbte Leder - nämlich auf kationisch, Chrom- oder Aluminium-gegerbte Leder einerseits und auf anionisch, pflanzlich oder synthetisch gegerbte oder nachgegerbte Leder andererseits - aufziehen sollen.

Die Kombination dieser erwünschten, universellen Eigenschaften war Veranlassung, die Synthese neuer Lederfarbstoffe vorzunehmen. In diesem Zusammenhang wurde nun gefunden, daß saure Azoverbindungen auf Basis von Resorcinharz als Kupplungskomponente die zuvor in der Aufgabenstellung dargelegten Anforderungen erfüllen.

Diese erfindungsgemäß beanspruchten wasserlöslichen Azoverbindungen besitzen die allgemeine Formel

$$[D^1 - N = N - R](-N = N - D)_m \qquad (1)\ \text{oder}$$
$$[R - N = N - T - N = N - R]\ (-N = N - D)_n \qquad (2)\ \text{oder}$$
$$[R - N = N - T - N = N - K]\ (-N = N - D)_n \qquad (3)\ \text{oder}$$
$$[R - N = N - T - N = N -]_2 K \qquad (4)\ \text{oder}$$
$$R - N = N - X\ [- N = N - T - N = N -]\ X - N = N - R \qquad (5)$$

in welcher bedeuten:

D ist der aromatische Rest einer Diazokomponente aus der Benzol-, Naphthalin- oder Diphenylamin-Reihe, welcher vorzugsweise 1 oder 2 saure Substituenten, insbesondere die Sulfonsäure-Gruppe, enthalten kann;

$D^1$ ist definiert wie D, kann darüber hinaus auch der Arylrest einer Aminoazo-Verbindung sein;

T ist der aromatische Rest einer Tetrazokomponente aus der Benzol-, Naphthalin-, Biphenyl-, Diphenylalkan-, Diphenyloxid-, Diphenylsulfid-, Diphenylamin-, Azobenzol- oder Stilben-Reihe, welcher vorzugsweise 1 oder 2 saure Substituenten, insbesondere die Sulfonsäure-Gruppe enthalten kann;

X ist ein aromatischer Rest aus der Benzol- oder Naphthalin-Reihe, welcher eine diazotierte Aminogruppe und zusätzlich eine kupplungsfähige Stelle in Nachbarschaft zu einer Hydroxygruppe aufweist;

K ist der Rest einer Kupplungskomponente von einer aromatischen Hydroxy- oder Dihydroxyverbindung aus der Benzol-, Naphthalin- oder Diphenylamin-Reihe oder von einem enolisierten oder enolisierbaren Acylessigsäure-Derivat;

R ist der Rest einer Kupplungskomponente auf Basis von einem Resorcinharz RH mit der angenäherten allgemeinen Formel

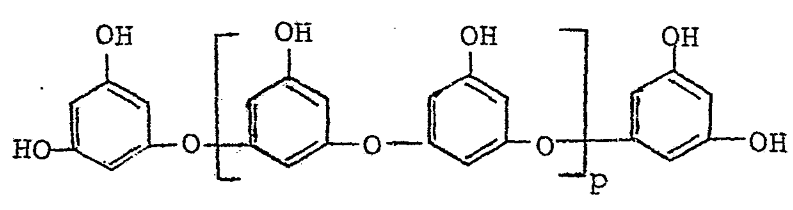

(6)

m steht für Null oder eine Zahl von 1 bis 5;
n steht für Null oder die Zahl 1 oder 2; und
p steht für Null oder eine Zahl von 1 bis 3.

Die vorliegende Erfindung betrifft weiterhin ein Verfahren zur Herstellung der obengenannten und definierten Azoverbindungen der allgemeinen Formel (1), (2), (3), (4) oder (5). Diese Verbindungen können hergestellt werden, indem man ein aromatisches Amin bzw. Diamin der allgemeinen Formel

$$D^1 - NH_2 \quad (7a) \quad \text{oder} \quad X - NH_2 \quad (7b) \qquad \text{bzw.} \quad H_2N - T - NH_2 \quad (8)$$

in welcher $D^1$, X und T die weiter oben angegebenen Bedeutungen besitzen, diazotiert bzw. tetrazotiert und mit einer Kupplungskomponente auf Basis von einem Resorcinharz RH mit der angenäherten allgemeinen Formel (6) entsprechend der zuvor angegebenen Bedeutung kuppelt,

wobei die so erhaltenen Kupplungsprodukte aus der ersten Stufe

(a) sofern weitere, durch die Kupplung in der ersten Stufe noch nicht verbrauchte, reaktionsfähige Azogruppen im Molekül zur Verfügung stehen oder nach Diazotierung von im Molekül gegebenenfalls noch vorhandenen freien, diazotierbaren Aminogruppen, dort in einer zweiten Stufe mit einer anderen Kupplungskomponente der allgemeinen Formel

$$KH \quad (9)$$

in welcher K die weiter oben angegebene Bedeutung besitzt, umgesetzt werden können, und/oder

(b) sofern im Molekül noch weitere kupplungsfähige Stellen zur Verfügung stehen, dort in einer zweiten Stufe mit der Diazonium- bzw. Tetrazonium-Verbindung aus einem aromatischen Amin bzw. Diamin der allgemeinen Formel

$$D - NH_2 \quad (7c) \qquad \text{bzw.} \qquad H_2N - T - NH_2 \quad (8)$$

von bezüglich der Bedeutung von D bzw. T entsprechend der vorhergehenden Spezifizierung vorzugsweise unterschiedlicher chemischer Konstitution als $D^1$ umgesetzt werden können,

und wobei man in bestimmten Fällen die Verfahrensschritte der ersten Stufe und der zweiten Stufe in beliebiger Reihenfolge vornehmen kann.

Das zur Synthese der Azoverbindungen mit der Formel (1), (2), (3), (4) oder (5) als Kupplungskomponente RH verwendete Resorcinharz entsprechend der angenäherten Formel (6) entsteht als Nebenprodukt bei der Herstellung von Resorcin aus Benzol-1,3-disulfonsäure nach dem Alkalischmelzverfahren. Dazu wird ausgehend vom Benzol die in erster Stufe durch Sulfonierung mittels rauchender Schwefelsäure bei 140-160°C gewonnene Benzol-1,3-disulfonsäure in der zweiten Stufe durch Behandlung in einer Alkalischmelze bei etwa 300-350°C zur analogen Dihydroxyverbindung umgesetzt. Die Hauptreaktion verläuft hierbei mit etwa 80 % Ausbeute nach folgendem Schema:

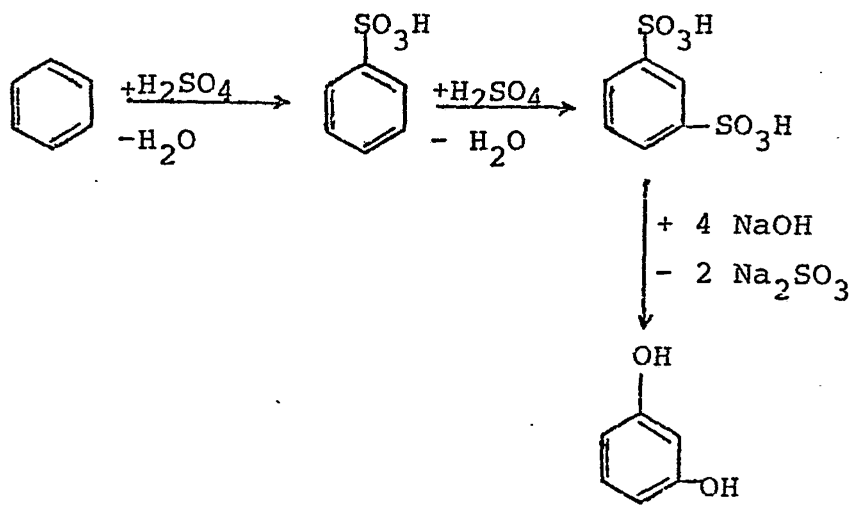


1.Stufe: Benzol-1,3-disulfonsäure

2.Stufe: Resorcin

In einer Nebenreaktion bildet sich intermediär das empfindliche Phloroglucin, das aber bei dieser hohen Schmelztemperatur unter intermolekularer Wasserabspaltung und Ätherbrückenbildung zu einem Polyhydroxyphenyläther mit der angenäherten Formel

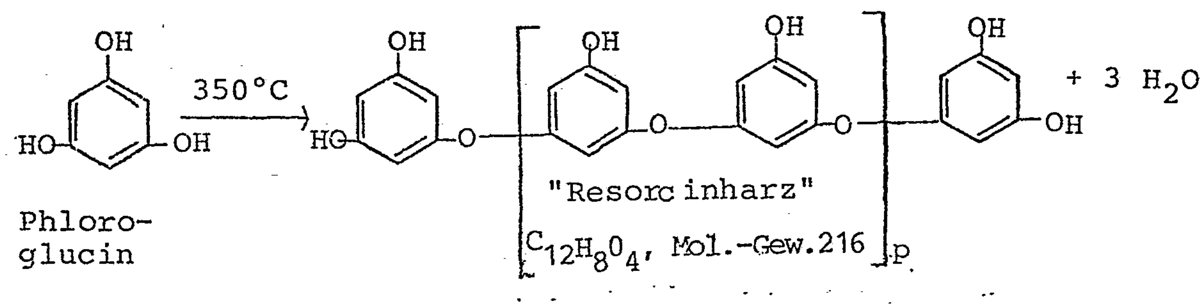


(Bedeutung von p wie weiter oben)

weiterkondensiert. Aufgrund dieser Herkunft sollte man davon ausgehen, daß das sogenannte Resorcinharz in Wirklichkeit eher ein Phloroglucinharz ist.

Im Dünnschichtchromatogramm zeigt das Resorcinharz eine einheitliche rotbraune Hauptkomponente (Rf-Wert 0,67 in Methanol-Butanol-Toluol 4:1:1) und eine etwas verschwommene, gelbbraune Nebenkomponente (Rf-Wert 0,75-0,88).

Durch Einrühren von heißem Wasser in die Harzschmelze in einer Menge entsprechend etwa einem Drittel des Harzgewichts, oder von Natronlauge, kann man das Harz in eine gut gießbare, d.h. leicht dosierbare Form überführen.

Die gegebenenfalls in einer zweiten Stufe im Rahmen der Farbstoff-Synthese verwendeten, als Kupplungskomponenten KH mit der Formel (9) bezeichneten aromatischen Hydroxyverbindungen sind dem Fachmann für den vorgesehenen Zweck hinlänglich geläufig.

Aromatische Amine der Formel (7a), (7b) oder (7c) sowie Diamine der Formel (8), die als Diazo- bzw. Tetrazokomponenten zur Herstellung der erfindungsgemäßen Azoverbindungen dienen, sind an sich bekannt und lassen sich entsprechend

der in der Literatur vielfach beschriebenen Weise herstellen.

Die Diazotierung der Amine der Formel (7a), (7b) oder (7c) bzw. Tetrazotierung der Diamine der Formel (8) kann nach allgemein bekannten Methoden, beispielsweise durch Einwirkung von Alkalinitrit und einer anorganischen Säure, wie Salzsäure, Schwefelsäure oder Phosphorsäure, oder durch Nitrosylschwefelsäure erfolgen.

Die Kupplung mit den Kupplungskomponenten RH der Formel (6) bzw. KH der Formel (9) kann ebenfalls in an sich bekannter Weise in neutralem bis alkalischem Milieu, bevorzugt in einem pH-Bereich zwischen 7 und 12 und bei einer Temperatur zwischen -5°C und +25°C vorgenommen werden.

Den Chemismus, welcher bei der Azokupplung nach dem beanspruchten Verfahren abläuft, kann man sich im Prinzip folgendermaßen vorstellen:

Da das Harz nach seiner Bildung durch Kondensation noch drei kupplungsfähige Stellen pro Benzolrest aufweist, lassen sich an das Grundmolekül $(C_{12}H_8O_4)\cdot p$ auch mehrere und verschiedenartige Diazo- bzw. Tetraazokomponenten ankuppeln, insgesamt bis zu 6 Komponenten an ein mittleres zweikerniges Molekül:

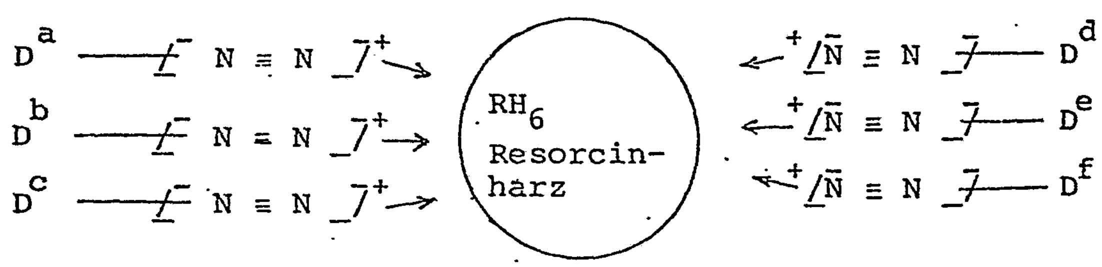


Desgleichen ist eine einseitige Kupplung von Tetrazonium-Verbindungen bei gleichzeitiger Ankupplung einer zweiten Kupplungskomponente an der noch nicht besetzten, anderen Halbseite des Moleküls möglich,

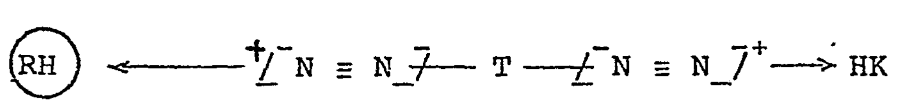

HK =andere Kupplungskomponente

gegebenenfalls darüberhinaus auch noch ein weiteres Ankuppeln zusätzlicher Diazoniumsalze an das Resorzinharz:

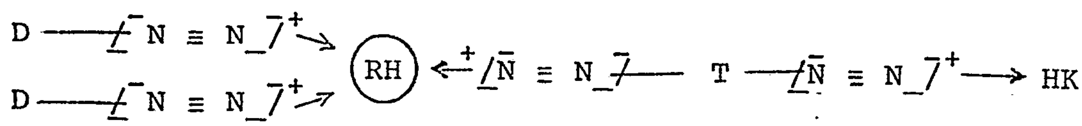

Auf diese Weise erhält man Gelb-, Orange-, Oliv-, Rot-, Violett-, Bordo-, Braun- und Schwarzfarbstoffe, die in Form ihrer Alkalisalze nicht mehr verharzen und sich bequem durch Wasserverdampfung der Reaktionslösung in rieselbare Pulverfarbstoffe überführen lassen. Weiterhin kann man die erfindungsgemäßen Verbindungen aus ihren Syntheseansätzen durch Sprühtrocknen isolieren; sie können auch durch Aussalzen mittels Elektrolyten, beispielsweise Natriumchlorid oder Kaliumchlorid, vorteilhaft nach Einstellung des Reaktionsgemisches auf einen pH-Wert von 3,5 bis 7,0, aus der Reaktionslösung abgeschieden und nach Filtration getrocknet werden. Schließlich ist es möglich, die nach der Synthese erhaltenen Lösungen der Verbindungen der Formel (1), (2), (3), (4) oder (5), gegebenenfalls nach Zusatz von Puffersubstanzen, direkt als Flüssigpräparation der färberischen Verwendung zuzuführen.

Die neuen Azoverbindungen der allgemeinen Formel (1), (2), (3), (4) oder (5) stellen wertvolle Farbstoffe dar; sie lassen sich bevorzugt auf den nachgenannten Substraten nach bekannten Anwendungsverfahren applizieren und echt fixieren.

Gegenstand der vorliegenden Erfindung ist somit auch die Verwendung der Verbindungen der Formel (1), (2), (3), (4) oder (5) als Farbstoffe, insbesondere zum Färben und Bedrucken von Textilmaterialien, die natürliche oder regenerierte Cellulose, Seide, Wolle oder synthetische Polyamidfasern enthalten oder daraus bestehen, von

Papier, Pelzfellen oder insbesondere von Leder aller bekannten, unterschiedlichen Gerbarten; bzw. ein Verfahren zum Färben und Bedrucken von Substraten aus den soeben erwähnten Textilmaterialien, aus Papier, Pelzfellen oder Leder unter Verwendung von Verbindungen der Formel (1), (2), (3), (4) oder (5).

Die erfindungsgemäß auf Basis von Resorcinharz als Kupplungskomponente gewonnenen Mono- und Polyazofarbstoffe sind aufgrund ihrer chemischen Zusammensetzung wasserlösliche Produkte von vorwiegend anionischer Natur. Sie ziehen aus wäßrigem Medium bereits bei relativ niedrigen Färbetemperaturen schnell auf Seide, Baumwolle, Viskose, Wolle und Polyamidfasern, aber auch auf Papier, Filz, Vliese und andere faserige Materialien auf und zeichnen sich durch gutes Egalisiervermögen auf diesen Substraten aus. Dadurch eignen sie sich neben Badfärbungen von Textilien aus langer Flotte nach der Ausziehmethode auch gut für das Foulard-Klotzfärbeverfahren und lassen sich vorzugsweise unter Wärmeeinwirkung auf die zuvor genannten Materialien fixieren.

Aufgrund der Tatsache, daß die Azoverbindungen der Formel (1), (2), (3), (4) oder (5) schön deckende Eigenschaften aufweisen, liegt das Haupteinsatzgebiet für die beanspruchten Farbstoffe auf dem Sektor Lederfärbung. In diesem Fall geht man nach den in der Technik üblichen und bekannten Applikations- und Fixierverfahren vor, wie sie zahlreich in der Literatur beschrieben sind.

Mineral-gegerbtes Leder, wie Cr-, Al- und Zr-Leder, wird hierbei im Lederteil satt und egal angefärbt. Das Pelzhaar und Pelzfelle werden in mittleren Tönen gefärbt. Überraschenderweise ziehen die neuartigen Farbstoffe satt auf die bekanntermaßen schwer und meist nur unter Zuhilfenahme zusätzlicher Färbereihilfsmittel anfärbbaren sogenannten "Crust"Leder (importierte, getrocknete

südamerikanische Rindleder, vorgegerbt mit Chrom-IIIsalzen, nachgegerbt mit pflanzlichen Gerbstoffen) und auch auf die sogenannten "Chromosa"-Leder (importierte Schaf-/Ziegenleder aus Indien, Pakistan, Bangla Desh), deren Gerbweise der der "Crust"Leder entspricht.

Durch dieses nicht zu erwartende Ziehvermögen auf die genannten - sich in Europa immer stärker einführenden - ungefärbten, importierten Halbfertigleder ermöglichen die neuen Farbstoffe eine erhebliche Verbesserung der bisherigen Färbemethoden auf den genannten Lederarten.

Beim Einsatz von Resorcinharz im Zuge der erfindungsgemäßen Herstellung von Azofarbstoffen insbesondere für die Lederfärbung stand die Suche nach preisgünstigen Ausgangs-Kupplungskomponenten im Vordergrund. In Anbetracht der Tatsache, daß aber solche harzige Rückstände bei einer Produktion von Resorcin regelmäßig anfallen und als Müll auf Halde deponiert bzw. kostenaufwendig verbrannt werden müssen, stellt die Verwertung des Harzes darüber hinaus einen bedeutsamen Beitrag zum Umweltschutz dar.

Die nachfolgenden Beispiele dienen zur Erläuterung der Erfindung. Die dort angegebenen Teile sind Gewichtsteile, die Angaben in Prozent beziehen sich auf Gewichtsprozent, sofern nichts anderes vermerkt ist. Volumenteile verhalten sich zu Gewichtsteilen wie Liter zu Kilogramm.

Bei dem gemäß den nachfolgenden Beispielen zur Herstellung der erfindungsgemäßen Azoverbindungen als Kupplungskomponente verwendeten Resorcinharz RH handelt es sich um ein Kondensationsprodukt entsprechend Formel (6), worin der Index <u>p</u> einen Durchschnittswert zwischen Null und 1 ausmacht.

Beispiel 1

19 g von 74%iger 4,4'-Diamino-diphenylamin-2-sulfonsäure (1/20 Mol) werden in 300 $cm^3$ Wasser gelöst, diese Lösung wird sodann mit 15 $cm^3$ einer 30%igen Salzsäure angesäuert und auf 15°C gekühlt. In diesen Ansatz läßt man zur Überführung des Diamins in die Tetrazoniumverbindung 7 g Natriumnitrit (1/10 Mol) in Form einer wäßrigen 5n-Lösung zutropfen und rührt noch etwa 1 Stunde nach.

Zur Kupplung versetzt man eine Lösung aus 30,8 g einer 70%igen, wäßrigen Einstellung von Resorcinharz (1/10 Mol) in 25 $cm^3$ einer 33%igen Natronlauge und 200 $cm^3$ Wasser, mit der zuvor erhaltenen gelben Tetrazolösung.

Nach Beendigung der Kupplung wird das Reaktionsprodukt durch Eindampfen der wäßrigen Phase isoliert. Im Anschluß an das Trocknen erhält man 55 g eines Farbstoffpulvers, welches sich mit rotbrauner Farbe leicht in Wasser löst und das die Disazoverbindung der Formel

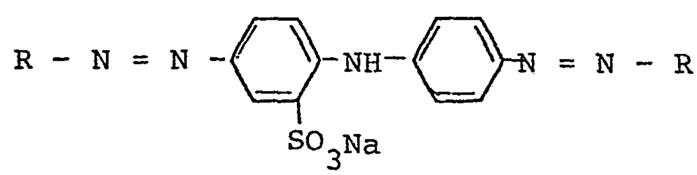

enthält. Das Dünnschichtchromatogramm des erzeugten Farbstoffes zeigt eine rotbraune Hauptkomponente neben einer gelbbraunen Nebenkomponente.

Beurteilung der Eignung der hergestellten Disazoverbindung bezüglich Färbbarkeit:

Textile Fasern /Ausziehfärbung

Multifibergewebe (Testgewebe, bestehend aus mehreren Streifen von unterschiedlicher Natur der Fasersubstanz bzw. des Fasertyps) wurde auf einer Haspel im Flottenverhältnis von 1:30 mit einem wäßrigen Bad, welches pro Liter eine Lösung von 8 g des zuvor beschriebenen

Farbstoffes enthielt, 30 Minuten lang bei ca. 80°C behandelt; danach wurde diese Flotte zwecks Baderschöpfung mit der halben Menge Ameisensäure (85%ig), bezogen auf das Farbstoffgewicht, abgesäuert und die Färbung zu Ende geführt. Das in dieser Weise gefärbte Gewebe wurde abschließend wie üblich gespült sowie fertiggestellt.

Die so behandelten Abschnitte des Multifibergewebes zeigten sodann folgende Farbnuancen:

| | |
|---|---|
| Wolle | dunkelbraun |
| Viskose | mittleres Rotbraun |
| Seide | gelbstichiges Dunkelbraun |
| sauer-modif. Polyacrylnitril | schwach violett |
| synth. Polyamid | gelbstichiges Mittelbraun |
| Polyester | schwach rosé |
| Baumwolle | rotstichiges Mittelbraun |
| 2 1/2-Acetat | helles Gelbbraun |

Textile Fasern /Klotzfärbung

Multifibergewebe (oben erläutert) wurde in einem Färbetrog durch 1-minütiges Tauchen in eine wäßrige Flotte von ca. 20°C, welche pro Liter eine Lösung von 10 g des zuvor beschriebenen Farbstoffes enthielt, einer Tränkung unterzogen und gegebenenfalls abgequetscht. Der in dieser Weise applizierte Farbstoff wurde daraufhin durch eine Säurebehandlung bei Raumtemperatur fixiert. Abschließend wurde die Färbung wie üblich gespült und getrocknet.

(Im vorliegenden Fall kann man die Farbstoff-Fixierung eventuell nach einer Zwischentrocknung auch durch Dämpfen vornehmen).

Die so behandelten Abschnitte des Multifibergewebes zeigten sodann folgende Farbnuancen:

| | |
|---|---|
| Viskose | mittelbraun |
| Seide | gelbbraun |
| synth.Polyamid | mittleres Gelbbraun |
| Baumwolle | mittelbraun |

Lederfärbungen (bei 40-60°C)

a) Handelsübliches chromgares, zwischengetrocknetes sowie vorgeschliffenes

| | |
|---|---|
| Spaltvelour-Leder | (Farbstoffmenge 5 %), |
| Crust-Leder , | (5 %), |
| Chromosa-Leder, oder | (5 %), |
| nachchromiertes Bastard-Leder | (5 %) |

wurde im rotierenden Walkfaß mit 1000 % Wasser bei ca. 50°C aufbroschiert und nach Zugabe einer Lösung des zuvor beschriebenen Farbstoffes,jeweils in der oben neben der zu färbenden Lederart angegebenen Menge (im allgemeinen 5-10 %), 30 Minuten lang bei der genannten Temperatur gefärbt. Daraufhin wurde zwecks Baderschöpfung in diese Flotte die halbe Menge Ameisensäure (85 %ig), bezogen auf das Farbstoffgewicht, zugegeben und das Substrat unter diesen Bedingungen noch 15 Minuten lang weitergewalkt. Schließlich wurde das gefärbte Leder wie üblich gespült und fertiggestellt.

Die Prozentangaben für die Farbstoffmenge und Flotten im obigen Beispiel beziehen sich auf das Trockengewicht der vorgeschliffenen Leder.

b) Handelsübliches feuchtes, chromgegerbtes und eventuell pflanzlich bzw. synthetisch nachgegerbtes

| | |
|---|---|
| Rindbox-Leder, oder | (Farbstoffmenge 1 %) |
| Boxcalf-Leder | (0,7 %) |

wurde im rotierenden Walkfaß mit 50-200 % einer wäßrigen Flotte, welche den zuvor beschriebenen Farbstoff jeweils in der oben neben der zu färbenden Lederart angegebenen Menge (im allgemeinen 0,2 - 1 %) enthielt, 30 Minuten lang bei etwa 50°C gewalkt und danach im gleichen Bad mit 2-5 % eines handelsüblichen Fettlickers gefettet. Zum Abschluß wurde diese Flotte, um das Bad vollkommen auszuziehen, mittels der halben Menge Ameisensäure (85 %ig), bezogen auf das Farbstoffgewicht, abgesäuert und die Färbung zu Ende geführt. Das auf diese Weise gefärbte Leder wurde nun zur Fertigstellung wie üblich gespült und getrocknet.

Die Prozentangaben für Farbstoff- und Fettungsmittelmenge sowie für die Flottenlänge im obigen Beispiel sind auf das Falzgewicht bezogen.

Die nach a) bzw. b) eingefärbten Lederproben zeigten sodann als Farbnuance jeweils ein brillantes, rotstichiges Dunkelbraun.

Die Lichtechtheitsprüfung dieser Lederfärbungen am Fadeometer ergab folgende Noten (Belichtungsdauer):

| | | |
|---|---|---|
| Boxcalf-Leder | 4-5 | (48 Stunden) |
| Crust-Leder | 4 | (96 Stunden) |
| nachchrom.Bastard-Leder | 5 | (96 Stunden) |
| Chromosa-Leder | 3 | (96 Stunden) |
| Bastard-Velour-Leder | 5 | (96 Stunden) |
| Handschuhleder (Cr/Al-gegerbt) | 3 | (96 Stunden) |

Am Beispiel der erzeugten Färbung auf Bastard-Velour-Leder wurden noch folgende Echtheitseigenschaften entsprechend den unten aufgelisteten Noten bewertet:

| | | |
|---|---|---|
| Reibechtheit | 5 | (Veslic-Tester /Filzanfärbung) |
| Chemischreinigung | 5 | (Anfärbung von Perchloräthylen nach Jod-Skala) |
| Heißwasserbeständigkeit | 5 | |
| Schweißechtheit | 4-5 | |
| Sublimierbeständigkeit in weißen Nitrocellulose-lack | 5 | |

Pelzfärbung

Chromiertes Schaffell wurde auf einer Haspel im Flottenverhältnis von 1:30 mit einem wäßrigen Bad, welches pro Liter eine Lösung von 2 g des zuvor beschriebenen Farbstoffes enthielt, 90 Minuten lang bei ca. 60°C behandelt; zur Vervollständigung des Auszieheffektes wurde das benutzte Färbebad danach mit der halben Menge Ameisensäure (85 %ig), bezogen auf das Farbstoffgewicht, abgesäuert und die Färbung nunmehr wie üblich abgeschlossen.

Die in dieser Weise gefärbten Schaffelle zeigten nach dem Spülen und Trocknen folgendes Aussehen bezüglich Farbnuance:

| | |
|---|---|
| Pelzleder | gelbbraun |
| Pelzhaar | gleichmäßig gelbbraun |

Papierfärbung Nuance: schwarzbraun

Beispiel 2

Zur Herstellung der Diazoniumverbindung werden 17 g (1/10 Mol) Sulfanilsäure in 200 $cm^3$ Wasser gelöst, zu dieser Lösung 15 $cm^3$ einer 30%igen Salzsäure hinzugefügt und nach Abkühlen auf 15 °C mit 7 g (1/10 Mol) Natriumnitrit, gelöst in Wasser, versetzt.

Diese Diazolösung wird nun in eine Lösung von 30,8 g einer 70%igen, wäßrigen Einstellung von Resorcinharz (1/10 Mol) in 25 $cm^3$ einer 33%igen Natronlauge und 200 $cm^3$

Wasser eingerührt.

Die auf diese Weise durch Kupplung erzeugte Monoazoverbindung der Formel

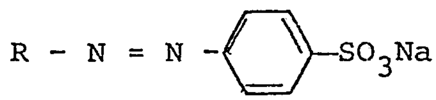

wird sodann nach praxisüblichen Methoden isoliert. Nach dem Trocknen erhält man 53,4 g eines Farbstoffpulvers, das sich in Wasser mit gelbbrauner Farbe löst. Dünnschichtchromatogramm: Einheitlicher gelbbrauner Farbfleck ohne Nebenkomponente.

Die Eignungstests analog Beispiel 1 der hergestellten Monoazoverbindung hatten folgendes Ergebnis:

Textile Fasern /Ausziehfärbung

| | |
|---|---|
| Wolle | mittleres Gelbbraun |
| Seide | mittleres Gelbbraun |
| synth. Polyamid | gelbbraun |
| Baumwolle | schwächeres Gelbbraun |

Textile Fasern /Klotzfärbung

| | |
|---|---|
| Viskose | gelb |
| Seide | gelboliv |
| Baumwolle | gelb |

Lederfärbungen (Farbstoffmenge) entsprechend a) bzw. b) zeigten auf Rindbox-Leder (0,7 %), Boxcalf-Leder (0,7 %), Crust-Leder (5%), nachchrom. Bastard-Leder (5 %), Spaltvelour-Leder (5 %) und Chromosa-Leder (5 %) jeweils ein mittleres Gelbbraun.

Echtheitseigenschaften der Färbungen auf Bastard-Velour-Leder /Noten:

| | |
|---|---|
| Lichtechtheit | 5 (96 Std.Fadeometer) |
| Reibechtheit | 5 |
| Chemischreinigung | 5 |
| Wasserechtheit | 5 |
| Schweißechtheit | 4-5 |

Pelzfärbung

Nachchromiertes Kaninfell (Flotte 1:30, 2 g/l Farbstoff, 90 Minuten bei 60°C) wurde in einem satten Gelbbraun angefärbt, das sehr grannige Kaninhaar gleichmäßig in Unterwolle-Granne/Haar goldgelb.

Chromgegerbtes Schaffell: Pelzleder gelbraun
Pelzhaar orange

Papierfärbung Nuance: goldgelb

Beispiel 3

17 g (1/10 Mol) Sulfanilsäure werden in einer Mischung aus 15 $cm^3$ einer 30%igen Salzsäure und 300 $cm^3$ Wasser gelöst, auf 15°C abgekühlt und durch Zugabe einer wäßrigen Lösung von 7 g (1/10 Mol) Natriumnitrit diazotiert.

Zur Kupplung wird die zuvor hergestellte Diazolösung in 21,6 g einer Lösung aus 50 Teilen Resorcinharz in 50 Teilen einer 33%igen Natronlauge (1/20 Mol) eingerührt, wobei man durch gleichzeitiges portionsweises Eintragen eines Gemisches aus 10 $cm^3$ einer 33%igen Natronlauge und 100 $cm^3$ Wasser den pH-Wert des Ansatzes im alkalischen Bereich hält.

Nach dem Isolieren und Trocknen des Reaktionsproduktes erhält man 46 g eines Farbstoffpulvers, welches sich in Wasser leicht mit gelber Farbe löst und das die Disazoverbindung der Formel

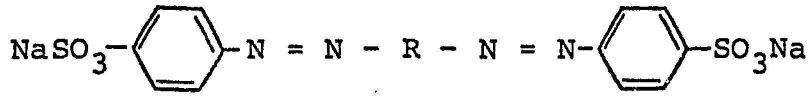

darstellt. Im Dünnschichtchromatogramm davon zeigen sich zwei gleichfarbige, dicht beieinanderliegende gelbbraune Hauptkomponenten und eine schwache grünliche Nebenkomponente.

Die Eignungstests analog Beispiel 1 der hergestellten Disazoverbindung hatten folgendes Ergebnis:

Textile Fasern /Ausziehfärbung

| | |
|---|---|
| Wolle | olivstichiges Gelbbraun |
| Seide | gelbbraun |
| synth. Polyamid | mittelbraun |

Lichtechtheit von Färbungen auf Wolle (48 Stunden / Fadeometer) : Note 3

Textile Fasern /Klotzfärbung

| | |
|---|---|
| Viskose | gelblich |
| Seide | olivgelb |
| Baumwolle | gelblich |
| Polyacryl | olivgelb |

Lederfärbungen (Farbstoffmenge) entsprechend a) bzw. b) zeigten auf Boxcalf-Leder (0,7 %) ein sehr gleichmäßiges Gelbbraun, auf Crust-Leder (5 %) ein gleichmäßiges, grünstichiges Gelbbraun.

Lichtechtheit von Färbungen auf Boxcalf-Leder: Note 1

Pelzfärbung

| | | |
|---|---|---|
| Chromiertes Schaffell: | Pelzleder | gelbbraun |
| | Pelzhaar | goldgelb |

Papierfärbung Nuance: olivbraun

Beispiel 4

Gemäß der in Beispiel 3 angegebenen Verfahrensweise werden 34 g (1/5 Mol) Sulfanilsäure, gelöst in 30 $cm^3$ einer 30%igen Salzsäure und 600 $cm^3$ Wasser, wie üblich unter Kühlung mit einer wäßrigen Lösung von 14 g (1/5 Mol) Natriumnitrit diazotiert.

Die erhaltene Diazolösung wird danach in 21,6 g einer 50%igen Resorcinharz-Lösung entsprechend Beispiel 3 (1/20 Mol) eingetropft, wobei man diesem Ansatz im Verlauf der Kupplung noch 20 $cm^3$ einer 33%igen Natronlauge zuführt.

Das Umsetzungsprodukt, welches die Tetrazoverbindung der Formel

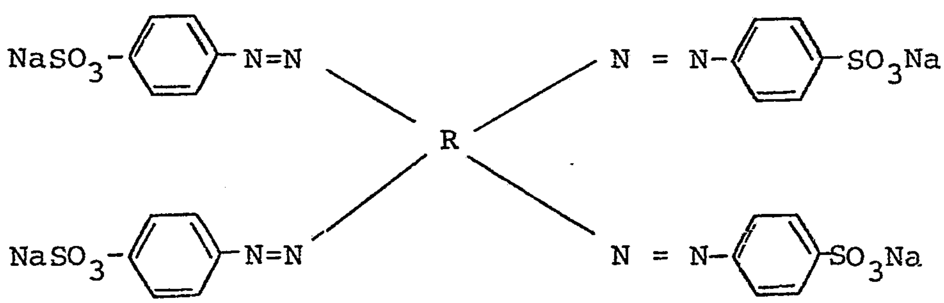

darstellt, wird nach herkömmlicher Art isoliert. Nach dem Trocknen erhält man 70 g eines Farbstoffpulvers, das sich in Wasser etwas rotstichiger löst als der nach Beispiel 3 gewonnene Farbstoff. Das Dünnschichtchromatogramm zeigt im vorliegenden Fall zwei gelbe Hauptkomponenten mit einem etwas geringeren Rf-Wert als der nach Beispiel 3.

Die Eignungstests analog Beispiel 1 der hergestellten Tetrazoverbindung hatten folgendes Ergebnis:

Textile Fasern /Ausziehfärbung

| | |
|---|---|
| Wolle | leuchtendes Orangebraun |
| Seide | gelbbraun |
| synth. Polyamid | orangebraun |

Lichtechtheit von Färbungen auf Wolle: Note 4

Textile Fasern /Klotzfärbung
Farbnuancen entsprechend Beispiel 3; Seide jedoch kräftiger gelbbraun.

Lederfärbungen (Farbstoffmengen) entsprechend a) bzw. b) zeigten auf Boxcalf-Leder (0,7 %) ein orangestichiges Gelbbraun. Auf Crust-Leder (5 %) erhielt man ein sehr gleichmäßiges, helles Gelbbraun, bei dem der Grünstich des Farbstoffes von Beispiel 3 fehlte.

Lichtechtheit von Färbungen auf Boxcalf-Leder: Note 2

Pelzfärbung

| | | |
|---|---|---|
| Chromiertes Schaffell: | Pelzleder | gelbbraun |
| | Pelzhaar | goldgelb |

Papierfärbung Nuance: orangebraun

Beispiel 5

33,6 g 4'-Amino-2-nitro-diphenylamin-5-sulfonsäure in Form einer 46%igen, feuchten Preßkuchenware (1/20 Mol) werden in 20 $cm^3$ einer 30%igen Salzsäure und 200 $cm^3$ Wasser gelöst, und das gelöste Amin wird nach Kühlung auf 15°C durch Behandlung mit 3,5 g Natriumnitrit (1/20 Mol), in Wasser gelöst, diazotiert.

Die so erhaltene Diazolösung wird daraufhin in 15 g einer gekühlten, 72%igen, wäßrigen Einstellung von Resorcinharz (1/20 Mol) eingerührt, der man zuvor noch 25 $cm^3$ einer 33%igen Natronlauge und 100 $cm^3$ Wasser zugesetzt hatte.

Nach beendigter Kupplung wird das Reaktionsprodukt isoliert. Man erhält 43 g eines Farbstoffpulvers, das sich in Wasser mit rotbrauner Farbe löst. Es stellt die Monoazoverbindung der Formel

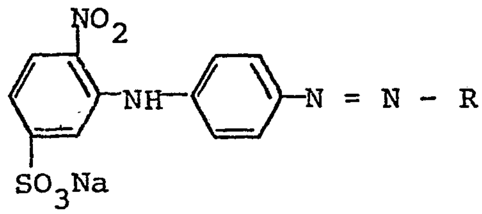

dar. Das Dünnschichtchromatogramm davon zeigt eine braune und eine gelbe Komponente.

Die Eignungstests analog Beispiel 1 der hergestellten Monoazoverbindung hatten folgendes Ergebnis:

Textile Fasern /Ausziehfärbung

| | |
|---|---|
| Wolle | klares, dunkles Rotbraun |
| Seide | klares, dunkles Rotbraun |
| synth. Polyamid | klares, dunkles Rotbraun |
| Baumwolle | rosé |
| 2 1/2-Acetat | gelb |

Lichtechtheit von Färbungen auf Wolle: Note 4-5

Textile Fasern /Klotzfärbungen

| | |
|---|---|
| Viskose | helles Rotbraun |
| Seide | mittleres Goldbraun |
| Baumwolle | helles Rotbraun |

Lederfärbungen (Farbstoffmenge) entsprechend a) bzw. b) zeigten auf

| | | |
|---|---|---|
| nachchrom. Rindbox-Leder | (1 %) | gleichmäßiges Gelbbraun |
| Spaltvelour-Leder | (5 %) | mittelbraun |
| nachchrom.Bastard-Leder | (5 %) | mittelbraun |
| Crust-Leder | (5 %) | sehr gleichmäßiges, gelbliches Mittelbraun |
| Boxcalf-Leder | (0,7%) | dunkelbraun |

Alle Lederarten wurden sehr tief eingefärbt. Lichtechtheit von Färbungen auf Boxcalf-Leder: Note 3.

Pelzfärbung

| | | |
|---|---|---|
| Chromiertes Schaffell (Flotte 1:10; 2 g/l Farbstoff; 90 Minuten bei 60°C) | : Pelzleder | gelbbraun |
| | Pelzhaar | gelbbraun |

Papierfärbung Nuance: gelbbraun

Beispiel 6

Man verfährt analog der im Beispiel 5 beschriebenen Verfahrensweise der Diazotierung und Kupplung, setzt jedoch anstelle der dort angegebenen Diazokomponente hier die gleiche Menge von 4'-Amino-4-nitro-diphenylamin-2-sulfonsäure ein.

Im vorliegenden Fall werden 38 g eines Farbstoffpulvers isoliert, welches die Monoazoverbindung der Formel

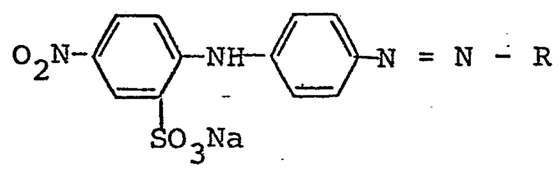

aufweist und das in wäßriger Lösung eine gelbstichigere Braunnuance zeigt als der o-Nitro-Farbstoff entsprechend Beispiel 5.

Die Eignungstests analog Beispiel 1 der hergestellten Monoazoverbindung hatten folgendes Ergebnis:

Textile Fasern /Ausziehfärbung

| | |
|---|---|
| Wolle | dunkelbraun |
| Seide | mittelbraun |
| synth. Polyamid | mittelbraun |

Lichtechtheit von Färbungen auf Wolle: Note 3

Textile Fasern /Klotzfärbung

| | |
|---|---|
| Viskose | orangebraun |
| Seide | gelbbraun |
| Baumwolle | orangebraun |

Die Textilfasern wurden sowohl in der Badfärbung als auch in der Klotzfärbung in der gleichen Abstufung angefärbt wie in Beispiel 5, jedoch hier mit einer weniger rotstichigen Braunnuance.

Lederfärbungen (Farbstoffmenge) entsprechend a) bzw. b) zeigten auf nachgegerbtem Rindbox-Leder (1 %), Crust-Leder (5 %) und Spaltvelour-Leder (5 %) klare, gelbstichige Brauntöne; auf Boxcalf-Leder (0,7 %) ein olivstichiges Gelbbraun. Sowohl Boxcalf-Leder als auch Crust-Leder wurden sehr tief eingefärbt.

Lichtechtheit von Färbungen auf Boxcalf-Leder: Note 2

Pelzfärbung

| | | |
|---|---|---|
| Chromiertes Schaffell: | Pelzleder | mittleres Gelbbraun |
| | Pelzhaar | goldorange |

Papierfärbung Nuance: gelbstichiges Oliv

Beispiel 7

5,4 g (1/20 Mol) m-Phenylendiamin werden in einer Mischung aus 20 $cm^3$ einer 30%igen Salzsäure und 100 $cm^3$ Wasser gelöst sowie - zur Vermeidung einer unerwünschten, intermolekularen Azofarbstoff-Bindung zu einem späteren Zeitpunkt - sorgfältig unter 10°C abgekühlt. Dann versetzt man diese Lösung mit 7 g (2/20 Mol) Natriumnitrit, gelöst in 20 $cm^3$ Wasser von 10°C, wobei die Tetrazoniumverbindung aus dem Ausgangs-Diamin gebildet wird.

Diese Tetrazolösung läßt man nun unter Rühren sehr schnell in 30 g einer 8°C kalten, 72%igen, wäßrigen Einstellung von Resorcinharz (2/20 Mol), in Mischung mit 30 $cm^3$ einer 33%igen Natronlauge sowie von 100 $cm^3$ Wasser, eintropfen.

Der auf diese Weise in erster Stufe erhaltene Disazofarbstoff wird - ohne Zwischenisolierung - sodann

in einer zweiten Stufe durch Behandlung mittels 2/20 Mol von diazotierter Sulfanilsäure (aus 17 g Sulfanilsäure/ 20 $cm^3$ Salzsäure (33 %ig) / 200 $cm^3$ Wasser / 7 g Natriumnitrit) einer weiteren Kupplungsoperation unterworfen. Daraufhin isoliert man das Verfahrenserzeugnis wie üblich.

Nach dem Trocknen erhält man 47 g eines Farbstoffpulvers, das sich mit rotbrauner Farbe in Wasser löst und welches die Tetrazoverbindung der Formel

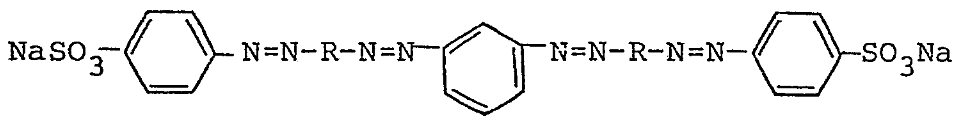

enthält. Das Dünnschichtchromatogramm davon zeigt eine kaum wandernde, braune Hauptkomponente neben einer gut wandernden Gelbnuance.

Die Eignungstests analog Beispiel 1 der hergestellten Tetrazoverbindung hatten folgendes Ergebnis:

Textile Fasern /Ausziehfärbung

| | |
|---|---|
| Wolle | mittleres Gelbbraun |
| Seide | gedecktes Olivbraun |
| synth. Polyamid | rotbraun |

Lichtechtheit von Färbungen auf Wolle: Note 3-4

Textile Fasern/Klotzfärbung

| | |
|---|---|
| Viskose | orangebraun |
| Seide | gelbbraun |
| Baumwolle | orangebraun |

Lederfärbungen (Farbstoffmenge) entsprechend a) bzw. b) zeigten auf Rindbox-Leder (1 %) und Spaltvelour-Leder (5 %) eine mittelbraune Nuance; Boxcalf-Leder (0,7 %)

ein gelbstichiges Mittelbraun; nachchrom. Bastard-Leder (5 %) ein helles Mittelbraun und Crust-Leder (5 %) ein klares, gleichmäßiges Gelbbraun.

Lichtechtheit von Färbungen auf Boxcalf-Leder: Note 2

Pelzfärbung

| | | |
|---|---|---|
| Chrom. Schaffell: | Pelzleder | gelbbraun |
| | Pelzhaar | trübes Goldgelb |

Beispiel 8

5,4 g (1/20 Mol) m-Phenylendiamin werden in 20 $cm^3$ einer 30%igen Salzsäure und 100 $cm^3$ Wasser gelöst, auf 8°C gekühlt und mittels einer wäßrigen Lösung von 3,5 g (1/20Mol) Natriumnitrit halbseitig diazotiert.

Diese Diazolösung wird nun in erster Stufe mit 15 g einer 72%igen, wäßrigen Einstellung von Resorcinharz (1/20 Mol) in Gegenwart von 45 $cm^3$ einer 33%igen Natronlauge zur Kupplung gebracht. Den so erhaltenen Monoazofarbstoff unterzieht man danach sofort (ohne Zwischenisolierung) in einer zweiten Stufe einer weiteren Kupplung durch Umsetzung mit 2/20 Mol von diazotierter Sulfanilsäure (aus 17 g Sulfanilsäure / 20 $cm^3$ Salzsäure (30 %ig) / 200 $cm^3$ Wasser /7 g Natriumnitrit).

Die Isolierung des Reaktionsproduktes, welches der Trisazoverbindung der Formel

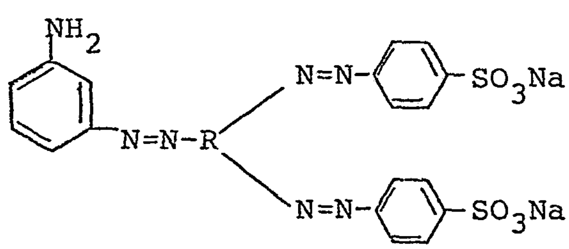

entspricht, ergibt 78 g eines Farbstoffpulvers.

Die Eignungstests analog Beispiel 1 der hergestellten

Trisazoverbindung hatten folgendes Ergebnis:

<u>Textile Fasern /Ausziehfärbung</u>

| | |
|---|---|
| Wolle | dunkelbraun |
| sauer-modif.Modacryl | orange |
| Seide | gelbbraun |
| sauer-modif.Polyacrylnitril | goldgelb |
| synth. Polyamid | dunkelbraun |
| Triacetat | goldgelb |
| Polyacryl | gedecktes Gelbbraun |
| 2 1/2-Acetat | orange |

Im Gegensatz zur Tetrazotierung vom m-Phenylendiamin nach Beispiel 7 erhält man hier einen orangebraunen, sehr brillant färbenden Farbstoff, der zum Unterschied von dem besagten Kupplungsprodukt gemäß Beispiel 7 auch auf Fasererzeugnisse aus Acrylnitril, sauermodifiziertem Modacryl und Acetatseide gut aufzieht.

Lichtechtheit von Färbungen auf Wolle: Note 3

<u>Textile Fasern /Klotzfärbung</u>

| | |
|---|---|
| Viskose | helles Gelbbraun |
| Seide | helles Olivbraun |

<u>Lederfärbungen</u> (Farbstoffmenge) entsprechend a) bzw. b) zeigten auf nachgegerbtem Rindbox-Leder (1 %), Spaltvelour-Leder (5 %) und Boxcalf-Leder (0,7 %) ein rotstichiges Mittelbraun; auf Crust-Leder (5 %) und nachchromiertem Bastard-Leder (5 %) ein helles Braun. Lichtechtheit von Färbungen auf Boxcalf-Leder: Note 2

<u>Pelzfärbung</u>

| | | |
|---|---|---|
| Chromgegerbtes Schaffell: | Pelzleder | gelbbraun |
| | Pelzhaar | goldgelb |

<u>Papierfärbung</u> Nuance: gelbbraun

Beispiel 9

Zur Herstellung der Tetrazoniumverbindung bringt man 19 g von 74%iger 4,4'-Diamino-diphenylamin-2-sulfonsäure (1/20 Mol) in 15 $cm^3$ einer 30%igen Salzsäure sowie 300 $cm^3$ Wasser in Lösung, kühlt letztere auf 12°C ab und trägt in den Ansatz 7 g (2/20 Mol) in Wasser gelöstes Natriumnitrit ein.

Diese Tetrazolösung wird nunmehr zunächst in erster Stufe unter alkalischen Bedingungen mit 9,5 g (1/20 Mol) 3-Hydroxy-diphenylamin, und sofort danach in zweiter Stufe mit 15 g einer 72%igen, wäßrigen Einstellung von Resorcinharz (1/20 Mol) gekuppelt.

Im Anschluß daran kuppelt man an den in der zuvor beschriebenen Weise hergestellten Disazofarbstoff (ohne Zwischenisolierung) in einer dritten Stufe noch einseitig 1/20 Mol diazotierte Sulfanilsäure (8,5 g Sulfanilsäure /15 $cm^3$ Salzsäure (30 %ig) / 100 $cm^3$ Wasser / 3,5 g Natriumnitrit) an.

Man erhält nach den praxisüblichen Maßnahmen zur Isolierung 72 g eines Farbstoffpulvers, das sich in Wasser mit rotbrauner Farbe löst, und im Dünnschichtchromatogramm eine rotbraune Hauptkomponente mit hohem Rf-Wert sowie eine gelbbraune Nebenkomponente mit mittlerem Rf-Wert zeigt. Hierbei handelt es sich um die Trisazoverbindung der Formel

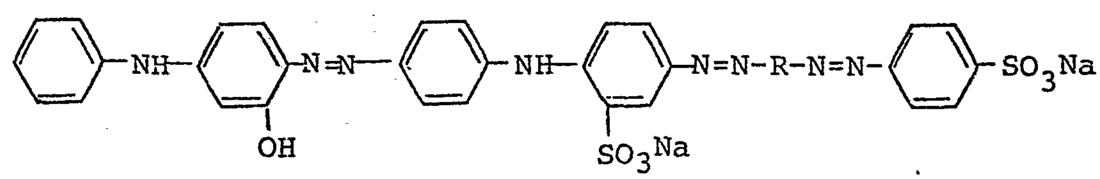

Die Eignungstests analog Beispiel 1 der hergestellten Trisazoverbindung hatten folgendes Ergebnis:

Textile Fasern /Ausziehfärbung

| | |
|---|---|
| Wolle | dunkelbraun |
| Seide | dunkelbraun |
| synth.Polyamid | dunkelbraun |

Lichtechtheit von Färbungen auf Wolle: Note 4-5

Lederfärbungen (Farbstoffmenge) entsprechend a) bzw. b) zeigten auf Crust-Leder (5 %) ein sehr gleichmäßiges Rotbraun; auf Boxcalf-Leder (0,7 %) einen dunklen Bordoton. Lichtechtheit von Färbungen auf Boxcalf-Leder: Note 3

Pelzfärbung

| | | |
|---|---|---|
| Chromgegerbtes Schaffell: | Pelzleder | rotbraun |
| | Pelzhaar | orange |

Papierfärbung Nuance: dunkelbraun

Beispiel 10

Entsprechend der Arbeitsvorschrift von Beispiel 1 werden 8 g (1/20 Mol) 1,5-Diamino-naphthalin in 15 $cm^3$ einer 30%igen Salzsäure sowie 150 $cm^3$ Wasser gelöst, auf 12°C gekühlt und durch Behandlung mit 7 g (2/20 Mol) Natriumnitrit (als wäßrige Lösung) tetrazotiert. Diese Tetrazolösung wird sodann mit einer Lösung von 21,6 g (2/20 Mol) Resorcinharz in 35 $cm^3$ einer 33%igen Natronlauge gekuppelt, wobei die Disazoverbindung der Formel

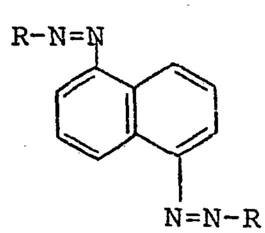

entsteht.

Man erhält 45 g eines Farbstoffpulvers, das sich mit rotbrauner Farbe in Wasser löst und im Dünnschichtchromatogramm eine rotbraune Komponente mit hohem Rf-Wert zeigt.

Die Eignungstests analog Beispiel 1 der hergestellten Disazoverbindung hatten folgendes Ergebnis:

Textile Fasern /Ausziehfärbung

| | |
|---|---|
| Wolle | dunkelbraun |
| Viskose | rötliches Mittelbraun |
| Seide | dunkelbraun |
| synth. Polyamid | dunkelbraun |
| Baumwolle | helleres Braun |

Lichtechtheit von Färbungen auf Wolle: Note 4

Textile Fasern /Klotzfärbungen

| | |
|---|---|
| Viskose | rotstichiges Braun |
| Seide | gelbstichiges Braun |
| Baumwolle | rotstichiges Braun |

Lederfärbungen (Farbstoffmenge) entsprechend a) bzw. b) zeigten auf Crust-Leder (5 %), nachchrom. Bastard-Leder (5 %), Spaltvelour-Leder (5 %), nachgegerbtem Rindbox-Leder (1 %) und Boxcalf-Leder (0,7 %) ein mittleres Rotbraun.
Lichtechtheit von Färbungen auf Boxcalf-Leder: Note 2-3

Pelzfärbungen

| | | |
|---|---|---|
| Chromgegerbtes Schaffell: | Pelzleder | gelbbraun |
| | Pelzhaar | helles Neutralbraun |

Papierfärbung Nuance: dunkelbraun

Beispiel 11

Entsprechend der Arbeitsvorschrift von Beispiel 1 werden 10,6 g (1/20 Mol) 4,4'-Diamino-azobenzol in 20 $cm^3$ einer 30%igen Salzsäure sowie 200 $cm^3$ Wasser gelöst, auf 10°C gekühlt und durch Umsetzung mit 7 g

(2/20 Mol) Natriumnitrit (als wäßrige Lösung) tetrazotiert. Diese Tetrazolösung wird danach mit 30 g einer 72%igen, wäßrigen Einstellung von Resorcinharz (2/20 Mol) in Gegenwart von 30 $cm^3$ einer 33 %igen Natronlauge gekuppelt, wobei die Trisazoverbindung der Formel

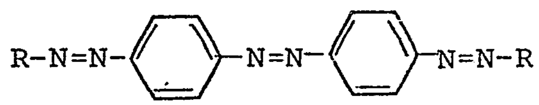

entsteht.

Man erhält 50 g eines Farbstoffpulvers, welches sich bordofarbig in Wasser löst und im Dünnschichtchromatogramm eine rotviolette Hauptkomponente zeigt.

Die Eignungstests analog Beispiel 1 der hergestellten Trisazoverbindung hatten folgendes Ergebnis:

Textile Fasern /Ausziehfärbung

| | |
|---|---|
| Wolle | dunkelbraun |
| sauer-modif. Modacryl | goldgelb |
| Seide | mittelbraun |
| sauer-modif. Polyacrylnitril | gelb |
| synth. Polyamid | dunkelbraun |
| Baumwolle | bordo |
| Triacetat | goldgelb |
| Polyacryl | goldgelb |
| 2 1/2-Acetat | goldgelb |

Lichtechtheit von Färbungen auf Wolle: Note 3-4

Textile Fasern /Klotzfärbungen

| | |
|---|---|
| Viskose | rotstichiges Mittelbraun |
| Seide | gelbstichiges Mittelbraun |
| Baumwolle | rotstichiges Mittelbraun |

Lederfärbungen (Farbstoffmenge) entsprechend a) und b) zeigten auf Crust-Leder (5 %) ein sehr egales, mittleres Braun mit leichtem Rotton; auf Boxcalf-Leder (0,7 %)

ein dunkles Rotbraun; auf Rindbox-Leder (1 %) und Spaltvelour-Leder (5 %) mittelbraun; und auf nachchrom. Bastard-Leder (5 %) neutralbraun.
Lichtechtheit von Färbungen auf Boxcalf-Leder: Note 2-3

Pelzfärbung

| | | |
|---|---|---|
| Chromiertes Schaffell: | Pelzleder | dunkelbraun |
| | Pelzhaar | beige |

Papierfärbung Nuance: mittelbraun

Beispiel 12

In analoger Weise wie in Beispiel 9 werden zur Herstellung der Tetrazoniumverbindung 19 g von 74%iger 4,4'-Diamino-diphenylamin-2-sulfonsäure (1/20 Mol) in einem Gemisch aus 15 $cm^3$ einer 30%igen Salzsäure und 300 $cm^3$ Wasser gelöst, auf 15°C abgekühlt und mit 7 g (2/20 Mol) Natriumnitrit versetzt. Die so erhaltene Tetrazolösung wird sodann in erster Stufe durch Zugabe von 9,5 g (1/20 Mol) 3-Hydroxy-diphenylamin und anschließend in einer zweiten Stufe durch Behandlung mit 15,2 g einer 72%igen, wäßrigen Einstellung von Resorcinharz (1/20 Mol) in Gegenwart von 45 $cm^3$ einer 33%igen Natronlauge einer beidseitigen, unterschiedlichen Kupplung unterworfen. Hierbei bildet sich die Disazoverbindung der Formel

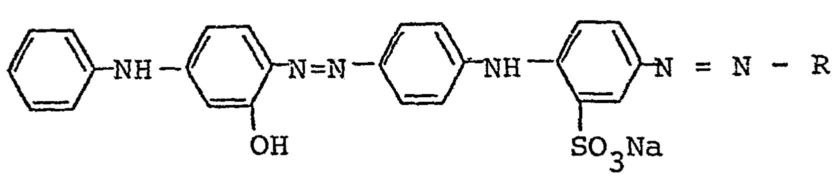

Man erhält 63 g eines Farbstoffpulvers, das sich in Wasser mit rotbrauner Farbe löst und im Dünnschichtchromatogramm eine rotbraune Hauptkomponente und eine gelbbraune Nebenkomponente zeigt.

Die Eignungstests analog Beispiel 1 der hergestellten Disazoverbindung hatten folgendes Ergebnis:

Textile Fasern /Ausziehfärbung

| | |
|---|---|
| Wolle | dunkelbraun |
| Viskose | bordo |
| sauer-modif. Modacryl | helleres Bordo |
| Seide | braun |
| synth. Polyamid | dunkelbraun |
| Baumwolle | bordo |
| 2 1/2-Acetat | weinrot |

Lichtechtheit von Färbungen auf Wolle: Note 4

Textile Faser /Klotzfärbung
(10 g/l Farbstoff, 10 Sekunden bei 20°C)

| | |
|---|---|
| Viskose | sehr trübes Violettbraun |
| Baumwolle | sehr trübes Violettbraun |

Lederfärbungen (Farbstoffmenge) entsprechend a) bzw. b) zeigten auf Crust-Leder (5 %) einen sehr egalen Bordoton; auf Boxcalf-Leder (0,7 %) rotstichiges Dunkelbraun, Lichtechtheit von Färbungen auf Boxcalf-Leder: Note 4

Pelzfärbung

| | | |
|---|---|---|
| Chromiertes Schaffell: | Pelzleder | rotstiches Dunkelbraun |
| | Pelzhaar | sehr gleichmäßiges, rotstichiges Orange |

Papierfärbung Nuance: dunkelbraun

Beispiel 13
In üblicher Weise werden 8,5 g (1/20 Mol) Sulfanilsäure und 5 g (1/20 Mol) Anilin jeweils separat unter Einsatz von 3,5 g (1/20 Mol) Natriumnitrit diazotiert und diese beiden Diazolösungen werden dann nacheinander mit einer Lösung von 10,8 g Resorcinharz (1/20 Mol) in 40 $cm^3$

einer 33%igen Natronlauge sowie 100 $cm^3$ Wasser zur Kupplung gebracht, bei der die Bildung der Disazoverbindung der Formel

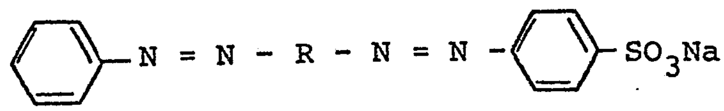

stattfindet.

Es werden 37 g eines Farbstoffpulvers isoliert, das sich nicht ganz rückstandslos mit gelbbrauner Farbe in Wasser löst und im Dünnschichtchromatogramm eine gelbbraune Hauptkomponente und eine gelbbraune Nebenkomponente zeigt.

Die Eignungstests analog Beispiel 1 der hergestellten Disazoverbindung hatten folgendes Ergebnis:

Textile Fasern /Ausziehfärbung

| | |
|---|---|
| Wolle | mittleres Gelbbraun |
| Viskose | olivstichiges Gelb |
| Seide | gelbbraun |
| synth. Polyamid | gelbbraun |
| Polyester | oliv |
| Baumwolle | oliv |
| Triacetat | oliv |
| Polyacryl | oliv |
| 2 1/2-Acetat | goldgelb |

Lichtechtheit von Färbungen auf Wolle: Note 3

Textile Fasern /Klotzfärbung
(10 g/l Farbstoff; 10 Sekunden bei 20°C)

| | |
|---|---|
| Seide | olivstichiges Gelb |

Lederfärbungen (Farbstoffmenge) entsprechend a) bzw. b) zeigten auf Crust-Leder (5 %) ein gleichmäßiges, leicht olivstichiges Gelbbraun; auf Boxcalf-Leder (0,7 %) olivstichiges Gelbbraun.

Lichtechtheit von Färbungen auf Boxcalf-Leder: Note 2

Pelzfärbung

| | | |
|---|---|---|
| Chromiertes Schaffell: | Pelzleder | olivbraun |
| | Pelzhaar | goldgelb |

Papierfärbung Nuance: gelbliches Oliv

Beispiel 14

Man verfährt zur Tetrazotierung von 18,5 g (1/20 Mol) 4,4'-Diamino-stilben-2,2'-disulfonsäure mittels 7 g (2/20 Mol) Natriumnitrit gemäß der in Beispiel 1 erwähnten Arbeitsweise und kuppelt diese Tetrazolösung entsprechend der dortigen Vorschrift mit 43 g einer 50%igen, wäßrigen Einstellung von Resorcinharz (2/20 Mol) in Gegenwart von 50 $cm^3$ einer 33%igen Natronlauge, wobei sich die Disazoverbindung der Formel

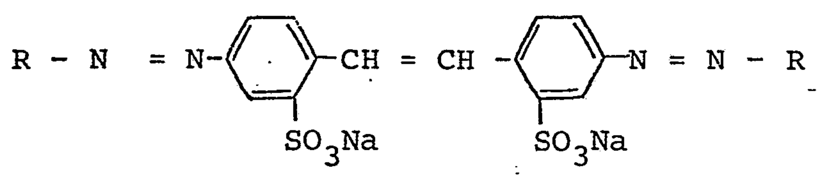

bildet.

Es werden 58 g eines Farbstoffpulvers erhalten, das sich mit weinroter Farbe in Wasser löst. Das Dünnschichtchromatogramm davon zeigt eine rotblaue Hauptkomponente mit hohem Rf-Wert und eine braungelbe Nebenkomponente mit mittlerem Rf-Wert.

Die Eignungstests analog Beispiel 1 der hergestellten Disazoverbindung hatten folgendes Ergebnis:

Textile Fasern /Ausziehfärbung

| | |
|---|---|
| Wolle | dunkelbraun |
| Viskose | bordo |
| Seide | dunkelbraun |
| synth. Polyamid | dunkles Grau |
| Baumwolle | helles Bordo |

Lichtechtheit von Färbungen auf Wolle: Note 4

Textile Fasern /Klotzfärbung

| | |
|---|---|
| Viskose | helles Rotbraun |
| Seide | helles Violettbraun |
| Baumwolle | helles Rotbraun |

Lederfärbungen (Farbstoffmenge) entsprechend a) bzw. b) zeigten auf Rindbox-Leder (1 %), Spaltvelour-Leder (5 %), nachchrom. Bastard-Leder (5 %), Boxcalf-Leder (0,7 %) und Crust-Leder (5 %) ein gleichmäßiges neutrales Mittelbraun mit sehr tiefer Einfärbung. Lichtechtheit von Färbungen auf Boxcalf-Leder: Note 1-2

Pelzfärbung

| | | |
|---|---|---|
| Chromgegerbtes Schaffell: | Pelzleder | dunkelbraun |
| | Pelzhaar | hellbraun |

Papierfärbung Nuance: braun

Beispiel 15

14 g (1/20 Mol) 4,4'-Diamino-3,3'-dimethoxy-diphenyl (Dianisidinbase) werden wie üblich durch Behandlung mit 7 g (2/20 Mol) Natriumnitrit tetrazotiert und sodann in Gegenwart von 50 $cm^3$ einer 33%igen Natronlauge mit einer Lösung von 21,5 g (2/20 Mol) Resorcinharz umgesetzt. Hierbei erfolgt beidseitig Kupplung und es entsteht die Disazoverbindung der Formel

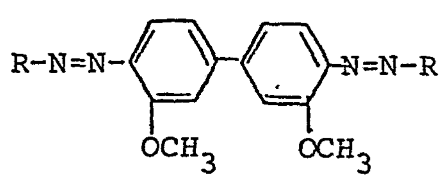

Man erhält 63 g eines Farbstoffpulvers,welches sich mit rotvioletter Farbe in Wasser löst und im Dünnschichtchromatogramm eine rotviolette Hauptkomponente und eine Gelbbraunkomponente mit leicht erhöhtem Rf -Wert zeigt.

Die Eignungstests analog Beispiel 1 der hergestellten Disazoverbindung hatten folgendes Ergebnis:

Textile Fasern /Ausziehfärbung

| | |
|---|---|
| Wolle | schwarzbraun |
| Viskose | dunkles Weinrot |
| Seide | dunkelbraun |
| synth. Polyamid | dunkelbraun |
| Baumwolle | dunkles Weinrot |
| 2 1/2-Acetat | gelbbraun |

Lichtechtheit von Färbungen auf Wolle: Note 5

Textile Fasern /Klotzfärbung

| | |
|---|---|
| Viskose | dunkelbraun |
| Seide | gelbbraun |
| Baumwolle | bordo |

Lederfärbungen (Farbstoffmenge) entsprechend a) bzw. b) zeigten auf Boxcalf-Leder (0,7 %) ein sehr dunkles, rotstichiges Braun; auf Rindbox-Leder (1 %) und Spaltvelour-Leder (5 %) ein rotstichiges Dunkelbraun; auf Crust-Leder (5 %) und nachchrom.Bastard-Leder (5 %) ein rotstichiges Mittelbraun.

Lichtechtheit von Färbungen auf Bastard-Leder: Note 2-3

Pelzfärbung

| | | |
|---|---|---|
| Schaffell: | Pelzleder | dunkelbraun |
| | Pelzhaar | mittleres Rotbraun |

Papierfärbung Nuance: dunkelbraun

Beispiel 16

19 g von 74 %iger 4,4'-Diamino-diphenylamin-2-sulfonsäure (1/20 Mol) werden nach herkömmlichen Methoden

tetrazotiert und sodann in erster Stufe zunächst einseitig mit 15 g einer 72%igen, alkalischen Resorcinharz-Lösung (1/20 Mol) und anschließend in einer zweiten Stufe mit 4 g (1/40 Mol) 1,5-Dihydroxy-naphthalin (an beiden Seiten gleichzeitig) gekuppelt.

Man erhält 54 g eines Farbstoffpulvers, das sich mit violettschwarzer Farbe in Wasser löst und im Dünnschichtchromatogramm eine dunkelbraune und eine violette Komponente zeigt. Es handelt sich hierbei um die Tetrazoverbindung der Formel

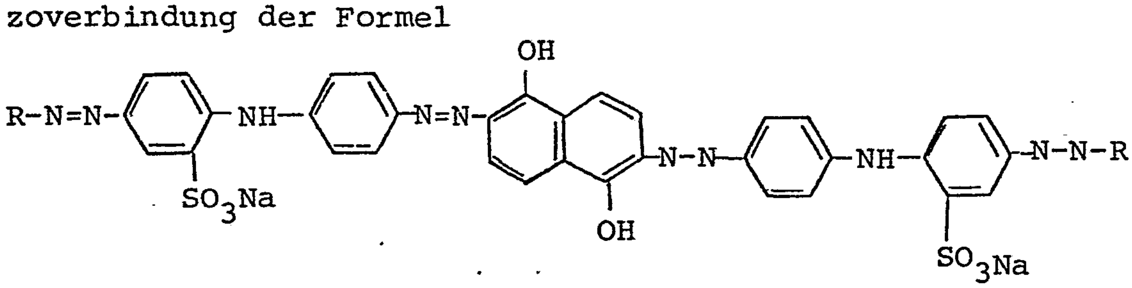

Die Eignungstests analog Beispiel 1 der hergestellten Tetrazoverbindung hatten folgendes Ergebnis:

Textile Fasern /Ausziehfärbung

| | |
|---|---|
| Wolle | bordo |
| Viskose | bordo |
| synth. Polyamid | rotbraun |
| Baumwolle | bordo |

Lichtechtheit von Färbungen auf Wolle: Note 2

Lederfärbungen

Alle Lederarten wurden in einem rotstichigen Mittelbraun angefärbt.

Lichtechtheit von Färbungen auf Boxcalf-Leder. Note 3

Papierfärbung Nuance: dunkelbraun

Beispiel 17

19 g von 74 %iger 4,4'-Diamino-diphenylamin-2-sulfonsäure (1/20 Mol) werden wie üblich durch Behandlung mit 7 g (2/20 Mol) Natriumnitrit tetrazotiert und die so erzeugte Tetrazoniumverbindung wird sodann mit einer

Mischung von 7,2 g (1/20 Mol) α-Naphthol sowie 10,6 g (1/20 Mol) Resorcinharz (beides als wäßrige Lösung) unter alkalischen Bedingungen gekuppelt, wobei die Disazoverbindung der Formel

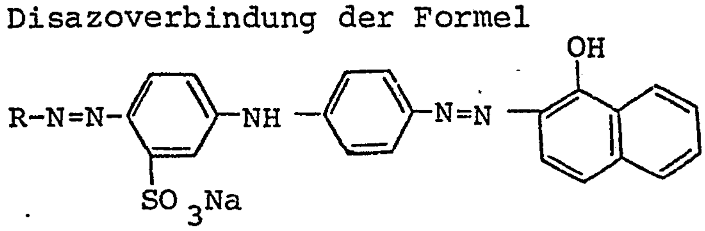

entsteht.

Nach der Isolierung des Reaktionsproduktes erhält man 55 g eines Farbstoffpulvers, das sich mit rotvioletter Farbe in Wasser löst und im Dünnschichtchromatogramm eine dunkelbraune Hauptkomponente und zwei nahe beieinander liegende gleichfarbige Nebenkomponenten zeigt.

Die Eignungstests analog Beispiel 1 der hergestellten Disazoverbindung hatten folgendes Ergebnis:

<u>Textile Fasern /Ausziehfärbung</u>

| | |
|---|---|
| Wolle | schwarzbraun |
| Viskose | schwarzbraun |
| Seide | gelbstichiges Dunkelbraun |
| synth. Polyamid | gelbstichiges Dunkelbraun |
| Baumwolle | rotstichiges Dunkelbraun |
| 2 1/2-Acetat | schwarzbraun |

Lichtechtheit von Färbungen auf Wolle : Note 6
auf Viskose: Note 6-7

<u>Textile Faser /Klotzfärbung</u>

| | |
|---|---|
| Viskose | dunkelbraun |
| Seide | gelbstichiges Mittelbraun |
| Baumwolle | dunkelbraun |
| Polyacryl | gelbbraun |

<u>Lederfärbungen</u>

Alle Lederarten wurden in einem gelbstichigen Mittelbraun

angefärbt.
Lichtechtheit von Färbungen auf Boxcalf-Leder: Note 2-3

Pelzfärbung

| | | |
|---|---|---|
| Chromgegerbtes Schaffell: | Pelzleder | dunkelbraun |
| | Pelzhaar | gleichmäßiges Gelbbraun |

Papierfärbung Nuance: dunkelbraun

Beispiel 18

Man verfährt zur Tetrazotierung von 21 g 4,4'-Diaminodiphenylamin (als Sulfat) in Form einer 47,4 %igen Feuchtware (1/20 Mol) mittels 7 g (2/20 Mol) Natriumnitrit gemäß der in Beispiel 1 beschriebenen Arbeitsweise und kuppelt diese Tetrazolösung nach den dortigen Angaben mit einer wäßrigen Lösung aus 21,6 g (2/20 Mol) Resorcinharz im alkalischen Medium, wobei die Disazoverbindung der Formel

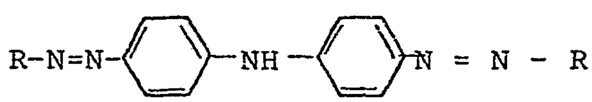

gebildet wird.

Es werden auf diese Weise 53 g eines Farbstoffpulvers erhalten, welcher sich mit rotvioletter Farbe in Wasser löst.

Die Eignungstests analog Beispiel 1 der hergestellten Disazoverbindung hatten folgendes Ergebnis:

Textile Fasern /Ausziehfärbung

| | |
|---|---|
| Wolle | dunkelbraun |
| Seide | dunkelbraun |
| Polyamid | dunkelbraun |

Lichtechtheit von Färbungen auf Wolle: Note 8

Textile Fasern /Klotzfärbung

| | |
|---|---|
| Viskose | rötliches Hellbraun |
| Seide | gelbstichiges Grau |
| Baumwolle | rötliches Hellbraun |

Lederfärbungen

zeigten ein sehr trübes, gelbstichiges Dunkelbraun auf allen Lederarten.

Lichtechtheit von Färbungen auf Boxcalf-Leder: Note 5

Pelzfärbung

| | | |
|---|---|---|
| Chromiertes Schaffell: | Pelzleder | schwarzbraun |
| | Pelzhaar | graubraun |
| Nachchrom. Kanin: | Pelzleder | schwarzbraun |
| | Pelzhaar | Granne und Unterwolle einheitlich bis in die Spitzen neutral grau |

Papierfärbung Nuance: dunkelgrau

Beispiel 19

Entsprechend der in der Praxis gebräuchlichen Methode wird die Tetrazotierung von 12,2 g (1/20 Mol) 4,4'-Diamino-3,3'-dimethoxy-diphenyl(Dianisidinbase) durch Umsetzung mit 7 g (2/20 Mol) Natriumnitrit vorgenommen. Die anschließende Kupplung der Tetrazoniumverbindung erfolgt im alkalischen Medium, zuerst einseitig mit 8 g (1/20 Mol) Natrium-salicylat und sodann mit 10,8 g (1/20 Mol) Resorcinharz, beides in gelöstem Zustand. Dabei bildet sich die Disazoverbindung der Formel

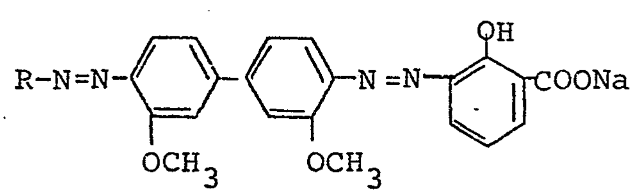

Man erhält 51 g eines Farbstoffpulvers, das sich mit dunkelbrauner Farbe in Wasser löst. Das Dünnschichtchromatogramm davon zeigt eine Rotviolettkomponente und eine gelbe Nebenkomponente.

Die Eignungstests analog Beispiel 1 der hergestellten Disazoverbindung hatten folgendes Ergebnis:

Textile Fasern /Klotzfärbung

| | |
|---|---|
| Viskose | rotbraun |
| Seide | helleres Rotbraun |
| Baumwolle | rotbraun |

Lederfärbungen

zeigten ein brillantes, dunkles Gelbbraun auf allen Lederarten.

Lichtechtheit von Färbungen auf Boxcalf-Leder: Note 3

Pelzfärbung

| | | |
|---|---|---|
| Chromiertes Schaffell: | Pelzleder | dunkelbraun |
| | Pelzhaar | gleichmäßiges Mittelbraun |

Papierfärbung Nuance: dunkelbraun

Beispiel 20

19 g von 74%iger 4,4'-Diamino-diphenylamin-2-sulfonsäure (1/20 Mol) werden wie üblich mit 7 g (2/20 Mol) Natriumnitrit tetrazotiert und die so gewonnene Tetrazolösung wird zur Kupplung zuerst halbseitig mit 10 g (1/20 Mol) einer 50%igen 3,3'-Dihydroxy-diphenylamin-Lösung (in 50%iger Natronlauge) und anschließend anderseitig mit 15 g einer 72 %igen, wäßrigen Einstellung von Resorcinharz umgesetzt.

Man erhält 48 g eines Farbstoffpulvers, das sich mit rotbrauner Farbe in Wasser löst und welches die Disazoverbindung der Formel

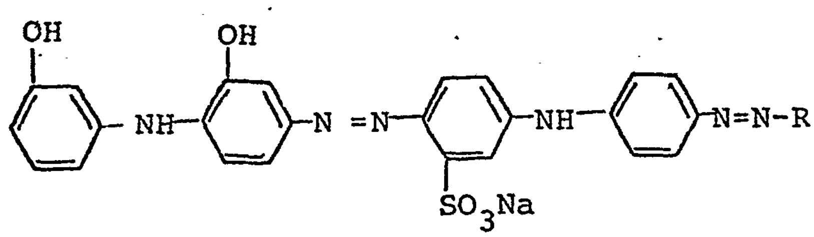

darstellt.

Eignungstests analog Beispiel 1 der hergestellten Disazoverbindung hatten folgendes Ergebnis:

Textile Fasern /Ausziehfärbung

| | |
|---|---|
| Wolle | gelbbraun |
| Viskose | violettbraun |
| synth.Polyamid | tiefes Bordo |
| Baumwolle | violettbraun |

Lichtechtheit von Färbungen auf Wolle: Note 3-4

Textile Fasern /Klotzfärbung

| | |
|---|---|
| Viskose | mittelbraun |
| Seide | gelbbraun |
| Baumwolle | mittelbraun |

Lederfärbungen (Farbstoffmengen) zeigten auf Boxcalf-Leder (5 %) ein dunkles Rotbraun; auf Crust-Leder (5 %) ein rotviolettstichiges Mittelbraun.

Lichtechtheit von Färbungen auf Boxcalf-Leder- Note 4

Papierfärbung Nuance: dunkelbraun

Beispiele 21-56

Die in den nachfolgenden Tabellenbeispielen aufgeführten, weiteren Azoverbindungen der allgemeinen Formel (1), (2), (3), (4) oder (5) lassen sich gleichfalls nach der vorliegenden Erfindung herstellen, beispielsweise entsprechend den Verfahrensweisen der obigen Ausführungsbeispiele. Diese erfindungsgemäßen, neuen Azoverbindungen zeigen ebenso sehr gute Farbstoffeigenschaften und liefern Färbungen und Drucke auf den in der Beschreibung erwähnten Fasermaterialien, Pelzfellen und insbesondere Leder nach den hierfür üblichen Applikation- und Fixiermethoden mit guten bis sehr guten

Echtheiten in den aus der untenstehenden Zusammenstellung für das jeweilige Substrat ersichtlichen Farbtönen. In der Spalte Lichtechtheiten bedeuten L = Leder und W = Wolle:

| Bsp. | Farbstoff | Papier | Wolle | Seide | Polyamid | Cr-Leder | Leder pflanzl. gegerbt | Licht-echtheit |
|---|---|---|---|---|---|---|---|---|
| 21 | 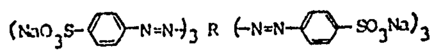 | orangebraun | gelbbraun | olivbraun | gelbbraun | rötl. Hellbraun | rötl. Hellbraun | L 2 W 4 |
| 22 | 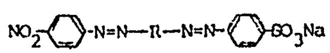 | gelbl. Mittelbraun | rotstich. Dunkelbraun | dunkelbraun | dunkelbraun | mittelbraun | mittelbraun | L 1 W 3-4 |
| 23 | 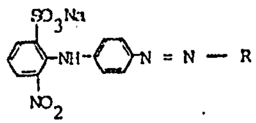 | gelbbraun | dunkelbraun | dunkelbraun | dunkelbraun | mittelbraun | mittelbraun | L 2-3 W 4 |
| 24 | 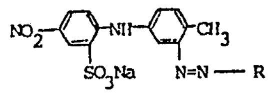 | braun | rotbraun | rotbraun | mittelbraun | gelbstich. Braun | mittelbraun | L 3 W 3 |
| 25 | 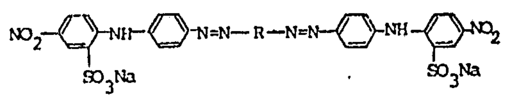 | gelbbraun | rotbraun | dunkelbraun | rotbraun | mittelbraun | olivbraun | L 2 W 3 |
| 26 | 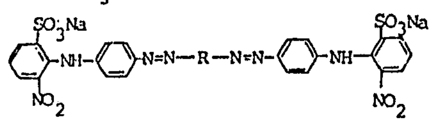 | rötl. Mittelbraun | mittelbraun | gelbstich. Dunkelbraun | mittelbraun | rötl. Mittelbraun | rötl. Mittelbraun | L 2 |
| 27 | 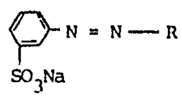 | braunst. Oliv | — | — | — | olivbraun | hellbraun | L 1 |
| 28 | 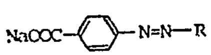 | goldgelb | dunkelbraun | mittelbraun | mittelbraun | mittelbraun | mittelbraun | L 1-2 W 3-4 |
| 29 | 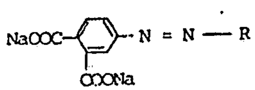 | | olivgrau | olivgrau | olivgrau | helles Gelbbraun | helles Gelbbraun | L 1 W 3-4 |
| 30 | 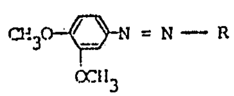 | mittelbraun | | | | mittelbraun | mittelbraun | |
| 31 | 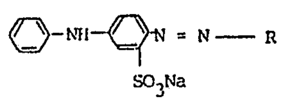 | olivbraun | — | — | — | dunkles Oliv | dunkles Oliv | L -3 |

| Bsp. | Farbstoff | Papier | Wolle | Seide | Polyamid | Cr-Leder | Leder pflanzl. gegerbt | Licht-echtheit |
|---|---|---|---|---|---|---|---|---|
| 32 | 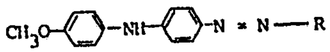 | grau | – | – | – | grau | olivgrau | L 1 |
| 33 | 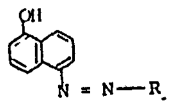 | olivstich. Dunkelgrau | – | – | – | olivbraun | olivbraun | L 2 |
| 34 | 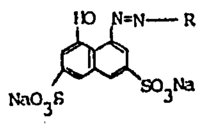 | mittelbraun | dunkelbraun | dunkelbraun | dunkelbraun | hellbraun | hellbraun | L 2-3 |
| 35 | 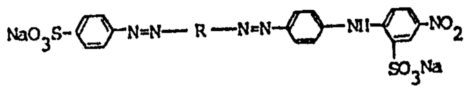 | braun | dunkelbraun | dunkelbraun | dunkelbraun | mittelbraun | mittelbraun | L 1<br>W 3-4 |
| 36 | 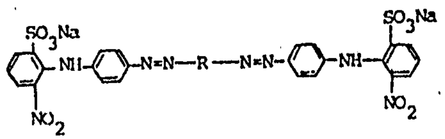 | braun | rötl. Mittelbraun | dunkelbraun | dunkelbraun | mittelbraun | rötl. Mittelbraun | L 2<br>W 3-4 |
| 37 | 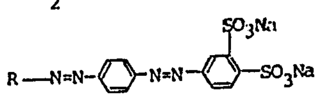 | gelbbraun | dunkelbraun | mittelbraun | dunkelbraun | gelbl. Mittelbraun | brill. Mittelbraun | L 2-3 |
| 38 | 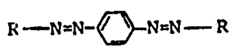 | dunkelbraun | – | – | – | mittelbraun | deckend. Mittelbraun | |
| 39 | 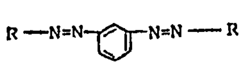 | gelbbraun | – | – | – | brill. Rotbraun | brill. Rotbraun | |
| 40 | 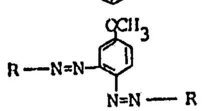 | mittelbraun | – | – | – | dunkelbraun | dunkelbraun | L 2-3 |
| 41 | 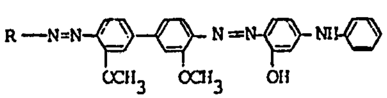 | rotbraun | – | – | – | dunkelbraun | rötl. Dunkelbraun | L 1 |
| 42 | 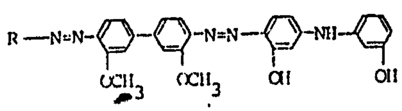 | | | | | | | |

| Bsp. | Farbstoff | Papier | Wolle | Seide | Polyamid | Cr-Leder | Leder pflanzl. gegerbt | Lichtechtheit |
|---|---|---|---|---|---|---|---|---|
| 43 | 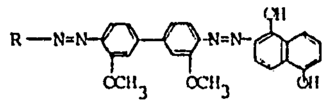 | dunkelbraun | schwarz | schwarzbraun | schwarz | dunkelbraun | dunkelbraun | L 3-4 W 8 |
| 44 | 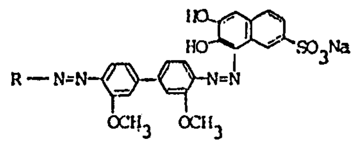 | schwarz | — | — | — | schwarz | hellbraun | L 2 |
| 45 | 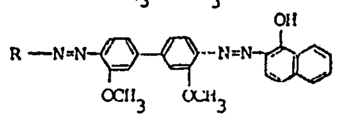 | braun | — | — | — | dunkelbraun | dunkelbraun | L 1 |
| 46 | 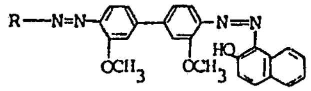 | rotbraun | — | — | — | dunkelbraun | rötl. Dunkelbraun | |
| 47 | 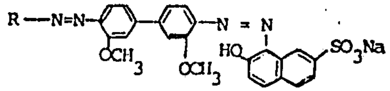 | dunkelbraun | — | — | — | dunkelbraun | mittelbraun | L 2 |
| 48 | 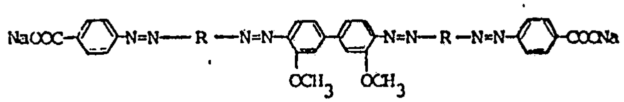 | braun | — | — | — | mittelbraun | mittelbraun | |
| 49 | 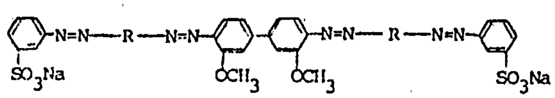 | dunkelbraun | — | — | — | mittelbraun | mittelbraun | L 1-2 |
| 50 | 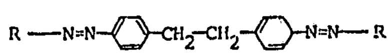 | gelbbraun | — | — | — | helles Gelbbraun | helles Gelbbraun | |
| 51 | 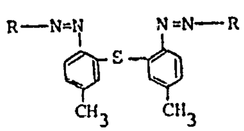 | gelbbraun | — | — | — | helles Orangebraun | helles Goldgelb | |
| 52 | 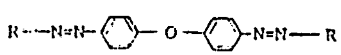 | braun | — | — | — | helles Orangebraun | hellbraun | |

| Bsp. | Farbstoff | Papier | Wolle | Seide | Polyamid | Cr-Leder | Leder pflanzl. gegerbt | Licht-echtheit |
|---|---|---|---|---|---|---|---|---|
| 53 | 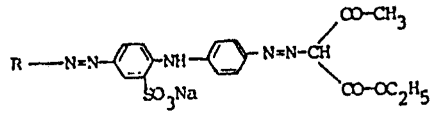 | mittelbraun | hellbraun | mittelbraun | mittelbraun | mittelbraun | hellbraun | L 2-3<br>W 2-3 |
| 54 | 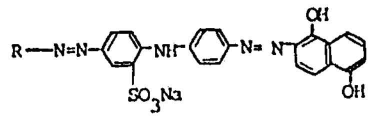 | schwarzbraun | grau | grau | grau | schwarzbraun | dunkelgrau | L 4-5<br>W 4 |
| 55 | 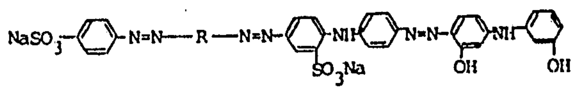 | dunkelbraun | mittelbraun | dunkelbraun | bordo | dunkelbraun | dunkelbraun | L 3-4<br>W 3 |
| 56 | 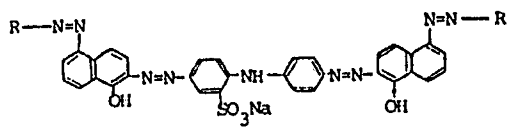 | dunkelbraun | — | — | — | dunkelbraun | grau | L 4-5 |

PATENTANSPRÜCHE

1. Wasserlösliche Azoverbindungen der allgemeinen Formel

$[D^1-N=N-R](-N=N-D)_m$ (1) oder

$[R-N=N-T-N=N-R](-N=N-D)_n$ (2) oder

$[R-N=N-T-N=N-K](-N=N-D)_n$ (3) oder

$[R-N=N-T-N=N-]_2K$ (4) oder

$R-N=N-X[-N=N-T-N=N-]X-N=N-R$ (5)

in welcher bedeuten:

D ist der aromatische Rest einer Diazokomponente aus der Benzol-, Naphthalin- oder Diphenylamin-Reihe, welcher vorzugsweise 1 oder 2 saure Substituenten, insbesondere die Sulfonsäure-Gruppe, enthalten kann;

$D^1$ ist definiert wie D, kann darüber hinaus auch der Arylrest einer diazotierten Aminoazo-Verbindung sein;

T ist der aromatische Rest einer Tetrazokomponente aus der Benzol-, Naphthalin-, Biphenyl-, Diphenylalkan-, Diphenyloxid-, Diphenylsulfid-, Diphenylamin-, Azobenzol- oder Stilben-Reihe, welcher vorzugsweise 1 oder 2 saure Substituenten, insbesondere die Sulfonsäure-Gruppe enthalten kann;

X ist ein aromatischer Rest aus der Benzol- oder Naphthalin-Reihe, welcher eine diazotierte Aminogruppe und zusätzlich eine kupplungsfähige Stelle in Nachbarschaft zu einer Hydroxygruppe aufweist;

K ist der Rest einer Kupplungskomponente von einer aromatischen Hydroxy- oder Dihydroxyverbindung aus der Benzol-, Naphthalin- oder Diphenylamin-Reihe, oder von einem enolisierten oder enolisierbaren Acylessigsäure-Derivat;

R ist der Rest einer Kupplungskomponente auf Basis von einem Resorcinharz RH mit der angenäherten allgemeinen Formel

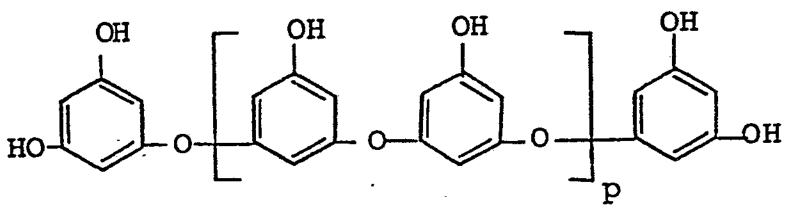

(6)

m steht für Null oder eine Zahl von 1 bis 5;
n steht für Null oder die Zahl 1 oder 2; und
p steht für Null oder eine Zahl von 1 bis 3.

2. Verfahren zur Herstellung der in Anspruch 1 genannten und definierten Azoverbindungen der allgemeinen Formel (1), (2), (3), (4) oder (5), dadurch gekennzeichnet, daß man ein aromatisches Amin bzw. Diamin der allgemeinen Formel

$D^1 - NH_2$ (7a)

oder bzw. $H_2N - T - NH_2$ (8)

$X - NH_2$ (7b)

in welcher $D^1$, X und T die in Anspruch 1 angegebenen Bedeutungen besitzen, diazotiert bzw. tetrazotiert und mit einer Kupplungskomponente auf Basis von einem Resorcinharz RH mit der angenäherten allgemeinen Formel (6) entsprechend der in Anspruch 1 angegebenen Bedeutung kuppelt,

wobei die so erhaltenen Kupplungsprodukte aus der ersten Stufe

a) sofern weitere, durch die Kupplung in der ersten Stufe noch nicht verbrauchte, reaktionsfähige Azogruppen im Molekül zur Verfügung stehen oder

nach Diazotiertung von im Molekül gegebenenfalls noch vorhandenen freien, diazotierbaren Aminogruppen, dort in einer zweiten Stufe mit einer anderen Kupplungskomponente der allgemeinen Formel

KH (9)

in welcher K die im Anspruch 1 angegebene Bedeutung besitzt, umgesetzt werden können, und/oder

b) sofern im Molekül noch weitere kupplungsfähige Stellen zur Verfügung stehen, dort in einer zweiten Stufe mit der Diazonium- bzw. Tetrazonium-Verbindung aus einem aromatischen Amin bzw. Diamin der allgemeinen Formel

$$D\text{-}NH_2 \quad (7c) \qquad \text{bzw.} \qquad H_2N - T - NH_2 \quad (8)$$

von bezüglich der Bedeutung von D bzw. T entsprechend Anspruch 1 vorzugsweise unterschiedlicher chemischer Konstitution als $D^1$ umgesetzt werden können,

und wobei man in bestimmten Fällen die Verfahrensschritte der ersten Stufe und der zweiten Stufe in beliebiger Reihenfolge vornehmen kann.

3. Verwendung der in Anspruch 1 genannten und definierten, oder der entsprechend Anspruch 2 hergestellten Azoverbindungen der allgemeinen Formel (1), (2), (3), (4) oder (5) als Farbstoffe.

4. Verwendung nach Anspruch 3 zum Färben oder Bedrucken von Textilmaterialien, die natürliche oder regenerierte Cellulose, Seide, Wolle oder synthetische Polyamidfasern enthalten oder daraus bestehen, von Papier, Pelzfellen oder insbesondere von Leder aller bekannten, unterschiedlichen Gerbarten.

0052716

Europäisches Patentamt

# EUROPÄISCHER RECHERCHENBERICHT

Nummer der Anmeldung
EP 81 10 7663

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | CH - A - 352 760 (HOECHST)<br>* Seite 1, ganz *<br>-- | 1,4 |
| A | US - A - 2 847 461 (LECHER, BUELL)<br>* Spalte 1, Absatz 1 *<br>-- | 1,4 |
| A | DE - C - 178 803 (BAYER)<br>* Seite 1, ganz *<br>-- | 1,4 |
| A | CH - A- 469 064 (SANDOZ)<br>* Seite 1, Formel I *<br>-- | 1,4 |
| A | BE - A - 679 316 (KRAUS)<br>* Seiten 1 und 2, ganz *<br>----------- | 1,4 |

KLASSIFIKATION DER ANMELDUNG (Int. Cl.³)

C 09 B 33/00
35/00
/D 06 P 1/06
D 21 H 1/46

RECHERCHIERTE SACHGEBIETE (Int. Cl.³)

C 09 B 33/00
35/00

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 17-03-1982 | GREEN |

EPA form 1503.1 06.78